(19) Europäisches Patentamt
European Patent Office
Office européen des brevets

(11) EP 4 491 637 A1

(12) **EUROPEAN PATENT APPLICATION**
published in accordance with Art. 153(4) EPC

(43) Date of publication:
**15.01.2025 Bulletin 2025/03**

(21) Application number: **23907873.6**

(22) Date of filing: **22.12.2023**

(51) International Patent Classification (IPC):
***C08B 31/04*** $^{(2006.01)}$ ***C08B 11/12*** $^{(2006.01)}$
***C08B 37/00*** $^{(2006.01)}$

(52) Cooperative Patent Classification (CPC):
**C08B 11/12; C08B 31/04; C08B 37/00**

(86) International application number:
**PCT/KR2023/021435**

(87) International publication number:
**WO 2024/136590 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220183169**

(71) Applicant: **LG Chem, Ltd.**
**Yeongdeungpo-gu**
**Seoul 07336 (KR)**

(72) Inventors:
- **KIM, Gi Hong**
  **Daejeon 34122 (KR)**
- **YUN, Haesung**
  **Daejeon 34122 (KR)**
- **LEE, Donghwan**
  **Daejeon 34122 (KR)**
- **JE, Hwaheon**
  **Daejeon 34122 (KR)**

(74) Representative: **Plasseraud IP**
**104 Rue de Richelieu**
**CS92104**
**75080 Paris Cedex 02 (FR)**

(54) **METHOD FOR PRODUCING CARBOXYALKYLATED POLYSACCHARIDE AND METHOD FOR PRODUCING BIODEGRADABLE SUPERABSORBENT RESIN USING SAME**

(57) The present disclosure relates to a method for preparing carboxyalkylated polysaccharides and a method for preparing a biodegradable super absorbent polymer using the same. More specifically, it relates to a method for preparing carboxyalkylated polysaccharides with high substitution efficiency by performing the carboxyalkylation reaction under high torque induced by gelatinization while using a specific content of water. In addition, it relates to a method for preparing a biodegradable super absorbent polymer capable of producing a super absorbent polymer with high water retention capacity by self-crosslinking the carboxyalkylated polysaccharide prepared therefrom.

【FIG. 1】

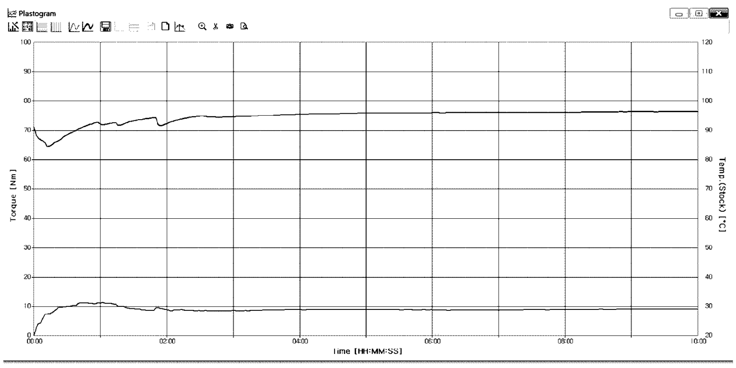


Processed by Luminess, 75001 PARIS (FR)

EP 4 491 637 A1

## Description

[TECHNICAL FIELD]

Cross-reference to Related Application(s)

This application claims the benefits of Korean Patent Application No. 1 0-2022-0183169 filed on December 23, 2022 with the Korean Intellectual Property Office, the disclosure of which is incorporated herein by reference in its entirety.

The present disclosure relates to a method for preparing carboxyalkylated polysaccharides and a method for preparing a biodegradable super absorbent polymer using the same.

[BACKGROUND OF ART]

Recently, as interest in biomass materials has increased due to environmental problems, interest in biodegradable materials such as polysaccharide, polyaspartic acid, and polyglutamic acid has increased.

In particular, a polysaccharide is widely present in nature as components of plants and animals, and has emerged as an important biodegradable material due to its cost-effectiveness and ease of use. However, in order to be used in various industrial fields, it is necessary to substitute the hydroxyl group (-OH) present in the polysaccharide with another functional group, and methods for producing modified polysaccharides substituted with various substituents have been under consideration.

Among these modified polysaccharides, carboxyalkylated polysaccharides with carboxyl groups introduced into the terminal groups can be applied to various applications requiring the inclusion of acidic groups. In particular, the carboxyalkylated polysaccharides can be used as the main raw material for biodegradable super absorbent polymers. The super absorbent polymer (SAP) is a type of synthetic polymeric material capable of absorbing 500 to 1000 times its own weight of moisture, and widely used for water retaining soil products for gardening, water stop materials for the civil engineering and construction, sheets for raising seedling, fresh-keeping agents for food distribution fields, materials for poultices, or electrical insulation, in addition to sanitary products such as paper diapers for children. Therefore, research is needed for a method to industrially produce carboxyalkylated polysaccharides in large quantities while causing minimal environmental impact

However, the conventional carboxyalkylation reaction of polysaccharides has faced challenges in terms of economic feasibility due to the alcohol-based organic solvent used during the carboxyalkylation reaction, and process issues for large-scale production. Furthermore, when a large amount of alcohol-based organic solvent was used, expensive solvent recovery equipment was also required to recover and reuse the solvent after reaction.

Accordingly, there is still a need for an economically viable and large-scale preparation method of carboxyalkylated polysaccharides for the production of biodegradable super absorbent polymers. As a result of research on this method, it has been confirmed that these requirements can be satisfied when carboxyalkylation of polysaccharides is performed under high torque and temperature conditions induced by gelatinization while using a specific content of water as a sole solvent, thereby completing the present invention.

[DETAILED DESCRIPTION OF THE INVENTION]

[Technical Problem]

The present disclosure relates to a method for preparing carboxyalkylated polysaccharides and a method for preparing a biodegradable super absorbent polymer using the same. More specifically, it relates to a method for preparing carboxyalkylated polysaccharides with high substitution efficiency by performing the carboxyalkylation reaction under high torque induced by gelatinization while using a specific content of water. In addition, it relates to a method for preparing a biodegradable super absorbent polymer capable of producing a super absorbent polymer with high water retention capacity by self-crosslinking the carboxyalkylated polysaccharide prepared therefrom.

[Technical Solution]

In order to solve the above problems, there is provided a method for preparing carboxyalkylated polysaccharides including the step of: mixing a polysaccharide, a hydroxide, a metal salt of haloalkylcarboxylic acid, and water in a reactor, and performing gelatinization and carboxyalkylation of the polysaccharide,

wherein the water is used in an amount of 0.35 to 1.0 times the weight of the polysaccharide, and a torque in the reactor is maintained at 7 to 18 Nm after gelatinization of the polysaccharide.

In addition, there is also provided a method for preparing a biodegradable super absorbent polymer including the

steps of:

- dissolving the carboxyalkylated polysaccharide prepared according to the preparation method in 5 to 15 times its weight of water (step 1); and
- self-crosslinking the product of step 1 while drying at pH 6 to 8 (step 2).

[ADVANTAGEOUS EFFECTS]

The method for preparing carboxyalkylated polysaccharides described above has the advantage of increasing the substitution efficiency of carboxyalkyl groups while using only a small amount of water as a solvent during the carboxyalkylation reaction. Furthermore, the above preparation method does not use an alcohol-based organic solvent as a reaction solvent, so it is environmentally friendly and economical, and is suitable for mass production of carboxyalkylated polysaccharides.

In addition, when the carboxyalkylated polysaccharide prepared by the above preparation method is self-crosslinked, it is possible to produce a biodegradable super absorbent polymer with high water retention capacity.

[BRIEF DESCRIPTION OF THE DRAWINGS]

FIG. 1 shows the internal torque and temperature in the reactor of Example 1-2.
FIG. 2 shows the internal torque and temperature in the reactor of Comparative Example 1-3.
FIG. 3 shows the internal torque and temperature in the reactor of Reference Example 1-1.
FIG. 4 shows the internal torque and temperature in the reactor of Reference Example 1-2.
FIG. 5 shows the internal torque and temperature in the reactor of Reference Example 1-3.
FIG. 6 shows the $^1$H NMR spectrum of carboxymethylated starch prepared in Example 1-1.
FIG. 7 shows the $^1$H NMR spectrum of carboxymethylated starch prepared in Example 1-2.
FIG. 8 shows the $^1$H NMR spectrum of carboxymethylated starch prepared in Reference Example 1-1.
FIG. 9 shows the $^1$H NMR spectrum of carboxymethylated starch prepared in Reference Example 1-2.
FIG. 10 shows the $^1$H NMR spectrum of carboxymethylated starch prepared in Reference Example 1-3.

[DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise. It will be further understood that the terms "include", "comprise", or "have" when used in this disclosure, specify the presence of stated features, steps, components, or combinations thereof, but do not preclude the presence or addition of one or more other features, steps, components, or combinations thereof.

Also, as used herein, when a layer or an element is mentioned to be formed "on" layers or elements, the layer or element may be directly formed on the layers or elements, or other layers or elements may be additionally formed between the layers, on a subject, or on a substrate.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

In addition, the technical terms are used merely to refer to specific embodiments, and are not intended to restrict the present disclosure unless it is explicitly expressed. The singular forms are intended to include the plural forms as well, unless the context clearly indicates otherwise.

Meanwhile, conventionally used super absorbent polymers are prepared by polymerizing an acrylic acid-based monomer with a cross-linking agent in the presence of a polymerization initiator. In the case of the super absorbent polymers prepared in this way, they do not have biodegradability, causing environmental problems.

Accordingly, development of a super absorbent polymer capable of exhibiting biodegradability has been made, and materials such as polysaccharide, polyaspartic acid, and polyglutamic acid have been discussed as biodegradable materials capable of preparing such biodegradable resins. However, they lower absorbency, which is an important physical property of the super absorbent polymer, or are not easy to mass produce, making it difficult to replace super absorbent polymers made of acrylic acid-based monomers.

Accordingly, modified polysaccharides where various functional groups are introduced into polysaccharides such as starch, which are biodegradable and easy to obtain, are being used. However, there has been a problem that these

modified polysaccharides are not environmentally friendly and not economical due to the organic solvents used during the production.

Accordingly, the present inventors devised a method of gelatinizing a polysaccharide such as starch using a small amount of water while stirring to induce a torque in the polysaccharide, and performing carboxyalkylation under the torque above a certain level. In this case, it was confirmed that the reaction could proceed in a short time without the additional use of an alcohol-based solvent, and the reactive efficiency (RE) could be increased compared to the case where an alcohol-based solvent was additionally used, thereby completing the present invention.

In addition, the present inventors have confirmed that when the carboxyalkylated polysaccharides prepared as above are self-crosslinked under specific pH conditions without the use of an internal cross-linking agent, a biodegradable super absorbent polymer having high absorption performance can be prepared.

Hereinafter, each invention will be described in detail.

**(Method for preparing carboxyalkylated polysaccharide)**

The method for preparing carboxyalkylated polysaccharides with improved reactive efficiency (RE) includes the step of mixing a polysaccharide, a hydroxide, a metal salt of haloalkylcarboxylic acid, and water in a reactor, and performing gelatinization and carboxyalkylation of the polysaccharide. Herein, the water is used in an amount of 0.35 to 1.0 times the weight of the polysaccharide, and a torque in the reactor is maintained at 7 to 18 Nm after gelatinization of the polysaccharide.

More specifically, in the above step, gelatinization of the polysaccharide proceeds first as the polysaccharide is mixed with the hydroxide and water, and then a carboxyalkylation reaction of the gelatinized polysaccharide proceeds with a metal salt of haloalkylcarboxylic acid.

At this time, the time at which the gelatinization of the polysaccharide is completed can be confirmed as the time at which the torque is stabilized by measuring the internal torque in the reactor from the start of mixing to the completion of mixing using a torque sensor provided in the reactor. More specifically, when the polysaccharide is gelatinized with water and hydroxides, the torque and temperature increase as the internal heat energy rises due to the load induced during gelatinization. Thereafter, when gelatinization is completed, the torque and temperature in the reactor are maintained constant. Therefore, carboxyalkylation of the polysaccharide can proceed under constant torque conditions in the reactor, and thus it is possible to produce carboxyalkylated polysaccharides with a uniform degree of substitution and improved substitution efficiency.

Therefore, when the torque in the reactor after gelatinization of the polysaccharide is less than 7 Nm, there is a problem in that the substitution efficiency of carboxyalkyl groups decreases. When the torque exceeds 18 Nm, the internal temperature may excessively increase and water used as a solvent may evaporate, which may deteriorate processability.

More specifically, the torque (Nm) in the above step may be 7 or more, 7.5 or more, or 8 or more, and 18 or less, 16 or less, 15 or less, 14 or less, 13 or less, 12 or less, 11 or less, 10 or less, or 9 or less.

The polysaccharide refers to a polymeric carbohydrate molecule composed of glucose repeating units. In this case, the polysaccharide is also referred to including a polymer molecule composed of a glucosamine unit in which an amino group is introduced into a hydroxyl group bonded to the 2nd carbon atom within the glucose repeating unit, and/or an N-acetylglucosamine unit in which an N-acetylamino group is introduced into a hydroxyl group bonded to the 2nd carbon atom within the glucose repeating unit. These polysaccharides can be classified into storage polysaccharides, which are used as a general energy source, structural polysaccharides, which form structural components of plants and animals such as cell walls of plants or exoskeleton of arthropods, or capsular polysaccharides, which form the capsule of bacteria. The storage polysaccharides include starch, dextrin, glycogen, inulin, etc., and the structural polysaccharides include cellulose, chitin, chitosan, pectin, arabinoxylan, carrageenan, agar, etc. The capsular polysaccharides include alginate, xanthan gum, guar gum, gellan gum, dextran, welan gum, etc. Among these, those that can be gelatinized are suitable for the method of preparing carboxyalkylated polysaccharides. More specifically, starch, dextrin, glycogen, inulin, cellulose, chitosan, pectin, agar, carrageenan, alginate, xanthan gum, guar gum, gellan gum, or a combination thereof may be used as the polysaccharide.

Herein, the gelatinization of polysaccharide refers to a phenomenon in which physical properties of polysaccharide particles change through hydration, swelling, and collapse when the polysaccharide is heated with water or mixed with water and a base. More specifically, as the micelle structure in the polysaccharide particle absorbs water molecules, the polysaccharide particle swells, and then the micelle structure in the polysaccharide particle collapses by heat energy or the base. In other words, in the above preparation method, the hydroxide, which is a base promoting gelatinization, is used together with the polysaccharide, and the water is used in a small amount compared to the polysaccharide, so a torque is induced during the gelatinization process and thus heat energy is continuously supplied in the polysaccharide, thereby further promoting gelatinization.

Therefore, in the above preparation method, the polysaccharide capable of such gelatinization may not have a reactive functional group other than a hydroxy group. For example, it is preferred that at least one selected from the group

consisting of starch, dextrin, glycogen, cellulose, pectin, inulin, agar, and guar gum is used as the polysaccharide. More preferably, starch or dextrin, a hydrolyzate thereof, may be used as the polysaccharide.

In particular, starch is contained in large amounts in foods such as potatoes, wheat, corn, rice, and tapioca, and thus readily available, which is desirable. This starch includes amylose and amylopectin, and the amylose and amylopectin may be included in the starch in a weight ratio of 1:99 to 80:20. It is advantageous for the amylopectin content to be greater than the amylose content in terms of processability and solubility. The starch may be selected from potato starch, corn starch, rice starch, wheat starch, tapioca starch, and sweet potato starch, and potato starch with a high amylopectin content may be more preferable.

In addition, the gelatinized polysaccharide prepared from the above step is not in a flowable liquid state dissolved or suspended in water, but is in a semi-solid gel state. Since this gelatinized polysaccharide in a gel state is mixed by the shearing action of the two screws provided in the reactor and the chamber wall, the torque and heat energy in the reactor can be maintained above a certain level.

In order to maintain the torque above a certain level after gelatinization of the polysaccharide, it is important to control the amount of water used. Therefore, in order to produce carboxyalkylated polysaccharides with a uniform degree of substitution while maintaining the torque so that the carboxyalkylation reaction in the reactor can proceed smoothly, water needs to be used in an amount of 0.35 to 1.0 times the weight of the polysaccharide.

On the other hand, when water is used in an amount of less than 0.35 times the weight of the polysaccharide, moisture is evaporated by the increased torque during the gelatinization process of the polysaccharide, which causes process problems and makes it difficult to prepare carboxyalkylated polysaccharides with a uniform degree of substitution. When the water is used in an amount exceeding 1.0 times the weight of the polysaccharide, the torque is reduced during the gelatinization process of the polysaccharide, resulting in a decrease in reactive efficiency and yield. Further, the cost for drying moisture increases, and the amount of by-products such as sodium chloride (NaCl) produced during the reaction increases, which may reduce absorption performance of the super absorbent polymer.

More specifically, the water may be used in an amount of 0.35 times or more, 0.4 times or more, 0.45 times or more, 0.5 times or more, 0.6 times or more, or 0.7 times or more, and 1.0 times or less, 0.9 times or less, 0.8 times or less, 0.75 times or less, 0.74 times or less, 0.73 times or less, or 0.72 times or less the weight of the polysaccharide.

Preferably, the water may be used in an amount of 0.45 to 0.75 times the weight of the polysaccharide.

As the water, ordinary water such as tap water, distilled water, deionized water, purified water, etc. can be used without limitation, but distilled water can be preferably used.

Additionally, the hydroxide and the metal salt of haloalkylcarboxylic acid do not dissolve in water before mixing with the polysaccharide. Also, unlike commonly known methods, polysaccharides are not mixed with an organic solvent before mixing with the hydroxide. Instead, all of the reaction materials for the carboxyalkylation reaction are added together with the solvent into the reactor in the above method, thereby shortening the production process and improving the production efficiency.

Further, no solvent other than water is used when mixing the polysaccharide with the hydroxide, metal salt of haloalkylcarboxylic acid, and water. Other commonly used solvents other than water include, for example, alcohol-based solvents such as ethanol, methanol, or isopropyl alcohol, and solvents miscible with water such as acetone, 1 ,4-dioxane, dimethylformamide, or dimethyl sulfoxide.

When water is not used at all as a solvent for the gelatinization and carboxyalkylation reaction of polysaccharides, there is a problem in that the reaction does not proceed because it is difficult for the hydroxide and the metal salt of haloalkylcarboxylic acid to mix with the polysaccharide. If a solvent other than water is mixed with water and then used, there may be environmental problems and cost issues associated with recovery, as well as safety issues such as evaporation due to the low boiling point. Additionally, if a solvent other than water is mixed with water and then used in the reactor, it interferes with the gelatinization of the polysaccharide, causing clumping and mixing problems. However, in the above preparation method, these problems can be overcome by using only water as a solvent in the gelatinization and carboxyalkylation of the polysaccharide.

Meanwhile, the polysaccharide used in the above preparation method includes an anhydroglucose unit (AGU) represented by the following Chemical Formula 1, and the molecular weight of the anhydroglucose unit (AGU) is 162.14.

[Chemical Formula 1]

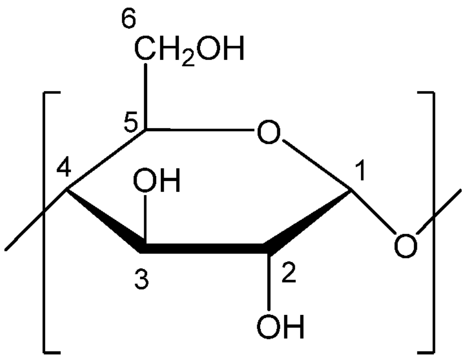

At this time, the numbering in Chemical Formula 1 refers to the position of each carbon, and carboxylalkylation may occur at the hydroxyl group of second carbon (C2), third carbon (C3), or sixth carbon (C6) in the anhydroglucose unit (AGU). For example, the carboxymethylated polysaccharide has a structure in which one or more hydroxyl groups (OH) in the anhydroglucose unit (AGU) are substituted with a carboxylmethyl group ($OCH_2COOH/OCH_2COO^-$).

Therefore, for example, when an alkali metal salt of haloacetic acid is used as a metal salt of haloalkylcarboxylic acid, the carboxyalkylated polysaccharide to be finally prepared through the above preparation method contains a carboxymethylated glucose unit represented by the following Chemical Formula 2:

[Chemical Formula 2]

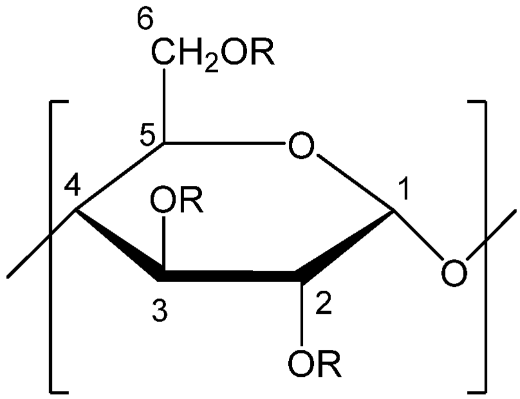

in the Chemical Formula 2,

each R is independently hydrogen, $CH_2COO^-M^+$, or $CH_2COOH$,
provided that at least one of R is $CH_2COO^-M^+$, or $CH_2COOH$, and M is an alkali metal.

The degree of substitution (DS) of the carboxyalkyl group in the carboxyalkylated polysaccharide prepared by the above method may be 0.6 to 1.1. When the degree of substitution (DS) of the carboxyalkyl group is too low, there is a problem in that water retention capacity of the super absorbent polymer is reduced, because the dissolution in water required for preparing the super absorbent polymer is not sufficient. When the degree of substitution (DS) of the carboxyalkyl group is too high, the generation of by-products increases, which is undesirable because the reactive efficiency and biodegradability decrease.

More specifically, the degree of substitution (DS) of the carboxyalkyl group may be 0.6 or more, 0.62 or more, or 0.64 or more, and 1.1 or less, 1.05 or less, 1.0 or less, 0.96 or less, 0.9 or less, 0.8 or less, 0.7 or less, or 0.65 or less.

Herein, the degree of substitution (DS) of the carboxyalkyl group refers to the average number of hydroxyl groups (-OH) substituted with carboxyalkyl groups per anhydroglucose unit. That is, since there are 3 hydroxyl groups per glucose unit, the theoretical maximum degree of substitution is 3. When the degree of substitution is 0.1, 3 hydroxyl groups are substituted per 10 glucose units. In addition, the degree of substitution of these acidic groups can be calculated by $^1H$ NMR analysis of the finally prepared carboxyalkylated polysaccharide.

At this time, the carboxyalkylated polysaccharide may be carboxymethylated. Accordingly, the degree of

substitution (DS) of the carboxyalkyl group in the above-mentioned carboxyalkylated polysaccharide can be viewed as meaning the degree of substitution of the carboxymethyl group in the carboxymethylated polysaccharide.

Additionally, the hydroxide may be one or more selected from the group consisting of sodium hydroxide, potassium hydroxide, and lithium hydroxide. At this time, sodium hydroxide (NaOH) is most preferable, because it is easy to obtain.

In addition, the hydroxide may be used in an amount of 0.5 to 1.5 equivalents relative to the number of moles obtained by dividing the weight (g) of the polysaccharide by the molecular weight of anhydroglucose unit (AGU). Specifically, the equivalent of the hydroxide can be obtained by dividing the weight (g) of the hydroxide used by the molecular weight to obtain the number of moles, and then dividing the obtained number of moles of the hydroxide by the number of moles of polysaccharide obtained by dividing the weight (g) of the polysaccharide used by 162.14, which is the molecular weight of anhydroglucose unit (AGU).

More preferably, the hydroxide may be used in an amount of 0.5 equivalents or more and less than 1.2 equivalents relative to the number of moles obtained by dividing the weight (g) of the polysaccharide by the molecular weight of anhydroglucose unit (AGU). If the equivalent of hydroxide is too low, the reaction may not proceed because there is not enough hydroxide, and the degree of substitution of carboxyalkyl in the final carboxyalkylated polysaccharide may be lowered. If the equivalent of hydroxide is too high, a process of neutralizing the high pH due to unreacted hydroxides is required, and as a result, there may be a problem of generating by-products that reduce absorbency.

More specifically, the hydroxide may be used in an amount of 0.5 equivalents or more, 0.6 equivalents or more, or 0.7 equivalents or more, and 1.15 equivalents or less, 1.1 equivalents or less, 1.0 equivalents or less, 0.9 equivalents or less, or 0.8 equivalents or less relative to the number of moles obtained by dividing the weight (g) of the polysaccharide by the molecular weight of anhydroglucose unit (AGU).

In addition, the metal salt of haloalkylcarboxylic acid is a metal salt of alkylcarboxylic acid (alkanoic acid, R-COOH wherein R is alkyl) having at least one halogen substituent, that is, a compound in which an anion of alkylcarboxylic acid having at least one halogen substituent is ionically bonded to a metal cation. Herein, the metal salt may be an alkali metal salt, an alkaline earth metal salt, or a divalent transition metal salt. Additionally, the halogen substituent may preferably be chloro or bromo. In addition, the alkyl group may be linear or branched, and the number of carbon atoms is not particularly limited, but may be 1 to 20 or 1 to 10. Specific examples of the alkyl group include methyl, ethyl, propyl, n-propyl, isopropyl, butyl, n-butyl, isobutyl, tert-butyl, sec-butyl, 1-methyl-butyl, 1-ethylbutyl, pentyl, n-pentyl, isopentyl, neopentyl, tert-pentyl, 1-ethyl-propyl, 1,1-dimethylpropyl, hexyl, n-hexyl, 1-methylpentyl, 2-methylpentyl, 4-methyl-2-pentyl, 3,3-dimethylbutyl, 2-ethylbutyl, heptyl, n-heptyl, isohexyl, 1-methylhexyl, 2-methylhexyl, 3-methylhexyl, 4-methylhexyl, 5-methylhexyl, cyclopentylmethyl, cyclohexylmethyl, octyl, n-octyl, tert-octyl, 1-methylheptyl, 2-ethylhexyl, 2,4,4-trimethyl-1-pentyl, 2,4,4-trimethyl-2-pentyl, 2-propylpentyl, n-nonyl, 2,2-dimethylheptyl, etc., but are not limited thereto.

The metal salt of haloalkylcarboxylic acid may be an alkali metal salt of haloalkylcarboxylic acid.

In one embodiment, when the carboxyalkylated polysaccharide is carboxymethylated, the metal salt of haloalkylcarboxylic acid may be an alkali metal salt of haloacetic acid.

In another embodiment, the metal salt of haloalkylcarboxylic acid may be an alkali metal salt of alkylcarboxylic acid substituted with at least one chloro.

In another embodiment, the metal salt of haloalkylcarboxylic acid may be an alkali metal salt of acetic acid substituted with at least one chloro.

Preferably, the metal salt of haloalkyl carboxylic acid may be an alkali metal salt of chloroacetic acid, in consideration of reactivity.

The alkali metal salt of chloroacetic acid may be one or more selected from the group consisting of sodium monochloroacetate (SMCA), potassium monochloroacetate, and lithium monochloroacetate. Preferably, sodium monochloroacetate (SMCA) is used considering its ease of availability and reactivity.

As an example, when sodium monochloroacetate is used as the metal salt of haloalkylcarboxylic acid, the finally prepared carboxymethylated polysaccharide contains a repeating unit represented by the following Chemical Formula 2-1:

[Chemical Formula 2-1]

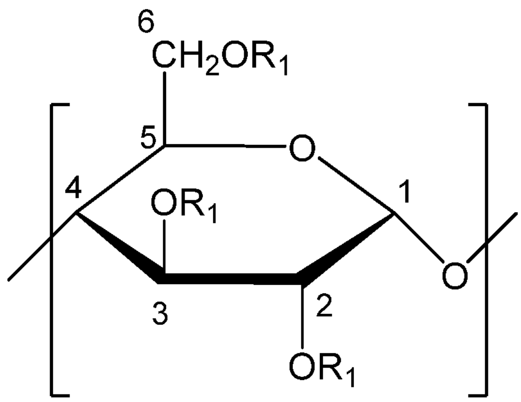

in the Chemical Formula 2-1,

each $R_1$ is independently hydrogen, $CH_2COO^-Na^+$, or $CH_2COOH$, provided that at least one of $R_1$ is $CH_2COO^-Na^+$, or $CH_2COOH$.

At this time, the metal salt of haloalkylcarboxylic acid may be used in an amount of 0.5 to 1.5 equivalents relative to the number of moles obtained by dividing the weight (g) of the polysaccharide by the molecular weight of anhydroglucose unit (AGU). Specifically, the equivalent of the metal salt of haloalkylcarboxylic acid can be obtained by dividing the weight (g) of the metal salt of haloalkylcarboxylic acid used by the molecular weight to obtain the number of moles, and then dividing the obtained number of moles of the metal salt of haloalkylcarboxylic acid by the number of moles of polysaccharide obtained by dividing the weight (g) of the polysaccharide used by 162.14, which is the molecular weight of anhydroglucose unit (AGU).

More preferably, the metal salt of haloalkylcarboxylic acid may be used in an amount of 0.5 equivalents or more and less than 1.2 equivalents relative to the number of moles obtained by dividing the weight (g) of the polysaccharide by the molecular weight of anhydroglucose unit (AGU). If the equivalent of the metal salt of haloalkylcarboxylic acid is too low, there may be a problem in which the hydroxyl groups of the polysaccharide are not sufficiently substituted with carboxylmethyl. If the equivalent of the metal salt of haloalkylcarboxylic acid is too high, there may be a problem in that chloroacetic acid or glycolic acid is formed as a by-product of the side reaction that occurs during the reaction, which reduces the reactive efficiency of the production of carboxymethylated polysaccharides due to a neutralization reaction with the hydroxide. In addition, if the pH decreases due to the neutralization reaction, the crosslinking reaction may also proceed during the reaction thereby reducing absorbency.

More specifically, the metal salt of haloalkylcarboxylic acid may be used in an amount of 0.5 equivalents or more, 0.6 equivalents or more, or 0.7 equivalents or more, and 1.15 equivalents or less, 1.1 equivalents or less, 1.0 equivalents or less, 0.9 equivalents or less, or 0.8 equivalents or less relative to the number of moles obtained by dividing the weight (g) of the polysaccharide by the molecular weight of anhydroglucose unit (AGU).

In addition, the metal salt of haloalkylcarboxylic acid may be used in an amount of 1 to 1.29 mol based on 1 mol of the hydroxide. When the metal salt of haloalkylcarboxylic acid is used too much or too little based on the hydroxide, the substitution reaction of the carboxyalkyl group may not proceed sufficiently to achieve the degree of substitution (DS) of the carboxyalkyl group within the above-mentioned range. Further, the content of sodium chloride (NaCl), a by-product that may be generated during the reaction, may increase. Additionally, overproduction of haloalkylcarboxylic acid or glycolic acid may cause the problem of partially forming a crosslinked structure. More specifically, the metal salt of haloalkylcarboxylic acid and the hydroxide may be used in a molar ratio of 1:1.

Additionally, the mixing may be performed in a state where 70 to 95% of the total volume in the reactor is filled. When the total volume of reactants filled in the reactor is too small, the torque may not be increased sufficiently for the carboxyalkylation reaction to proceed during gelatinization. When the total volume of reactants filled in the reactor is too large, it is difficult to introduce them into the reactor and the carboxyalkylation substitution reaction may not occur uniformly.

More specifically, the mixing may be performed in a state where 70% or more, 75% or more, 76% or more, or 77% or more, and 95% or less, 94% or less, 93% or less, or 92% or less of the total volume in the reactor is filled.

In addition, any kneader equipped with two screws or wing rotors that can generate torque and heat energy can be used without limitation as a reactor for preparing the above-mentioned carboxyalkylated polysaccharide. For example, an internal mixer such as a Banbury mixer or an Intermix mixer, a two-roll mill, etc. may be used.

Preferably, an internal mixer may be used as the reactor.

Additionally, the mixing may be performed for 5 to 15 minutes. At this time, the two screws or wing rotors provided in the reactor may rotate at 30 to 100 rpm. More preferably, the mixing may be performed for 10 minutes.

Herein, the gelatinization of the polysaccharide may be completed within 2/5 hours of the total mixing time from the start of mixing. The time at which the gelatinization of the polysaccharide is completed can be confirmed as the time at which the torque is stabilized by measuring the internal torque in the reactor from the start of mixing to the completion of mixing using a temperature and torque sensor provided in the reactor as described above. For example, when the total mixing time is 10 minutes, gelatinization of the polysaccharide can be completed within 4 minutes.

Meanwhile, the temperature in the reactor may be maintained at 90 to 110 °C after gelatinization of the polysaccharide. As the internal heat energy increases due to the load induced during gelatinization, the internal temperature in the reactor rises until gelatinization is completed. However, after gelatinization is completed, no additional load is induced and the temperature is maintained within a certain range. Therefore, as not only the torque but also the temperature is maintained above a certain level after gelatinization of the polysaccharide, the substitution efficiency of the carboxyalkyl group of the polysaccharide can be further improved.

More specifically, the temperature in the reactor may be 90 °C or higher, 92 °C or higher, 94 °C or higher, or 96 °C or higher, and 110 °C or lower, 105 °C or lower, 100 °C or lower, lower than 100 °C, 99 °C or lower, 98 °C or lower, or 97°C or lower after gelatinization of the polysaccharide.

When an internal mixer is used as the reactor as described above, the temperature and torque in the reactor can be measured through a temperature and torque sensor between two screws.

In addition, after the above step, the preparation method may further include the step of dissolving the prepared product in water and then precipitating it in an alcohol-based organic solvent. This is to purify the prepared product, carboxyalkylated polysaccharides, to obtain carboxyalkylated polysaccharides from which impurities have been removed.

Herein, the alcohol-based organic solvent may be one or more selected from the group consisting of methanol, ethanol, and isopropyl alcohol.

In addition, the alcohol-based organic solvent may be used in a volume (ml/g) of 10 to 60 times the weight of the product. Among them, methanol is the most preferable in terms of purification efficiency and cost.

In addition, after the above step, the preparation method may further include the step of recovering the precipitate by filtration under reduced pressure; and the step of drying the recovered precipitate. After these steps, it is possible to obtain carboxyalkylated polysaccharides from which the remaining hydroxide and generated by-products are effectively removed.

**(Method for preparing biodegradable super absorbent polymer)**

The method for preparing a biodegradable super absorbent polymer with improved water retention capacity includes the following steps:

dissolving the carboxyalkylated polysaccharide prepared according to the above preparation method in 5 to 15 times its weight of water (step 1); and
self-crosslinking the product of step 1 while drying at pH 6 to 8 (step 2).

**Step 1**

First, the step 1 is a step of dissolving the carboxyalkylated polysaccharide prepared according to the above-described method in 5 to 15 times its weight of water. Through the above step, self-crosslinking in step 2 to be described later can sufficiently occur in the solution.

Herein, when the carboxyalkylated polysaccharide is dissolved in less than 5 times its weight of water, the precipitate may clump together, causing problems in removal of by-products. When the carboxyalkylated polysaccharide is dissolved in more than 15 times its weight of water, there may be a problem of increased costs due to excessive use of solvent.

The dissolution in step 1 may be performed under standard temperature and pressure conditions. Herein, standard temperature means a temperature of about 21 to about 23 °C, and standard pressure means atmospheric pressure without any pressure applied.

**Step 2**

The step 2 is a step of self-crosslinking the product of step 1 while drying at pH 6 to 8. The pH may be adjusted, for example, using an aqueous hydrochloric acid solution, an aqueous sodium hydroxide solution, or an aqueous potassium hydroxide solution, and can be adjusted using an acid/base solution commonly used for pH adjustment. Through the

above step, a crosslinked polymer in which polysaccharides are crosslinking polymerized through an esterification reaction in the carboxyalkylated polysaccharides is produced.

In particular, the crosslinking reaction in step 2 is a self-crosslinking reaction, and a crosslinking agent typically used in the production of a crosslinked polymer of super absorbent polymer is not used. More specifically, meth(acrylate)-based compounds such as polyethylene glycol (meth)acrylate, and ethylene glycol di(meth)acrylate; and epoxy-based compounds such as ethylene glycol diglycidyl ether, propylene glycol, and glycerin are typically used as the crosslinking agent, but such crosslinking agents are not used in the above preparation method. When a crosslinking agent is used, the content of biomass-based raw materials in the final super absorbent polymer is reduced, so that self-crosslinking the carboxyalkylated polysaccharides without a separate crosslinking agent is more advantageous in improving biodegradability.

In addition, during the crosslinking reaction, a reaction catalyst and/or heat stabilizer may be additionally used to promote the esterification reaction.

The catalyst for an esterification reaction may include 4-dimethylaminopyridine (DMAP), magnesium acetate, tetra-n-butyl titanate (TBT), lead acetate, sodium acetate, potassium acetate, antimony trioxide, N-methylimidazole or a mixture thereof. The catalyst may be used in an amount of 0.1 to 5 mol based on 1 mol of the carboxyalkylated polysaccharide in order to shorten the reaction time and obtain the desired degree of crosslinking. Specifically, the reaction catalyst may be used in an amount of 0.1 mol or more, 0.5 mol or more, 1 mol or more, or 2 mol or more, and 4.5 mol or less, 4 mol or less, or 3.5 mol or less based on 1 mol of the carboxyalkylated polysaccharide.

Additionally, an organic or inorganic phosphorus compound may be used as the heat stabilizer. The organic or inorganic phosphorus compound may be, for example, phosphoric acid, an organic ester of phosphoric acid, phosphorous acid, or an organic ester of phosphorous acid. More specifically, as commercially available materials for the heat stabilizer, phosphoric acid, alkyl phosphate, or aryl phosphate may be used.

Further, during the crosslinking reaction, additional additives such as a thickener, a plasticizer, a storage stabilizer, and an antioxidant may be used, if necessary.

In addition, the self-crosslinking reaction in step 2 is performed at pH of 6 to 8. When the pH in the self-crosslinking reaction is less than 6, the crosslinking reaction may proceed rapidly and there is a risk that water retention capacity of the super absorbent polymer may be reduced. When the pH in the self-crosslinking reaction exceeds 8, the crosslinking may proceed very slowly or the reaction may hardly occur, which is not desirable.

Additionally, drying in step 2 may be performed at a temperature of 100 to 130 °C. The drying method may be selected and used without limitation in the constitution if it is a method commonly used in the art. Specifically, the drying step may be performed by a method such as hot air provision, infrared radiation, microwave radiation, UV ray radiation, or the like.

Specifically, the drying may be performed under vacuum. Meanwhile, the drying may be performed for about 30 minutes to about 4 hours, or about 2 to 3 hours, in consideration of the process efficiency and the like.

In addition, the drying method may be selected and used without limitation in the constitution if it is a method commonly used in the art. Specifically, the drying step may be performed by a method such as hot air provision, infrared radiation, microwave radiation, UV ray radiation, or the like. The moisture content of the crosslinked polymer prepared after the drying may be about 5 to about 10 wt%.

## Additional steps

In addition, the preparation method may further include, after the step 2, the step of pulverizing and classifying the crosslinked polymer prepared in step 2.

However, before pulverizing the crosslinked polymer, a coarse pulverization step may be optionally performed.

The coarse pulverization step is a step for increasing drying efficiency in a subsequent drying step and controlling the particle size of the super absorbent polymer powder to be finally prepared. At this time, a pulverizing machine used herein may include, but its configuration is not limited to, any one selected from the group consisting of a vertical pulverizer, a turbo cutter, a turbo grinder, a rotary cutter mill, a cutter mill, a disc mill, a shred crusher, a crusher, a meat chopper, and a disc cutter.

In the coarse pulverization step, the crosslinked polymer may be pulverized to have a weight average particle diameter of about 2 to 10 mm. It is technically difficult to pulverize the crosslinked polymer to have a diameter of less than 2 mm because of its high moisture content, and there may be a phenomenon that the pulverized particles cohere with each other. Meanwhile, when the polymer is pulverized to have a diameter of larger than 10 mm, the efficiency enhancing effect in the subsequent drying step may be insignificant.

Subsequently, a step of pulverizing and classifying the coarsely pulverized crosslinked polymer may be performed.

The pulverization step can be performed so that the particle diameter of the crosslinked polymer powder, that is, the base resin, is about 150 to about 850 μm. In order to pulverize the polymer into such diameter, a pin mill, a hammer mill,

a screw mill, a roll mill, a disc mill, or a jog mill may be used as the pulverizing machine, but the present disclosure is not limited thereto.

Further, in order to control physical properties of the super absorbent polymer to be finally prepared after the pulverization step as described above, a step of classifying the pulverized polymer powder according to the particle diameter may be further performed.

Accordingly, the finally prepared super absorbent polymer may be in the form of a powder with a particle diameter of 150 to 850 μm. This particle diameter can be measured according to the EDANA WSP 220.3 method (European Disposables and Nonwovens Association).

In addition, the super absorbent polymer may satisfy a centrifuge retention capacity (CRC) of 30 to 45 g/g as measured according to EDANA WSP 241.3. More specifically, the centrifuge retention capacity (CRC) of the super absorbent polymer may be 30 g/g or more, 35 g/g or more, 37 g/g or more, 39 g/g or more, 39.2 g/g or more, 40 g/g/ or more, 41 g/g or more, or 41.2 g/g or more, and 45 g/g or less, 44 g/g or less, or 43.5 g/g or less.

Hereinafter, the present invention will be described in more detail by the following examples. However, these examples are for illustrative purposes only, and the invention is not intended to be limited by these examples.

**Examples - Preparation of carboxymethylated starch**

**Measurement of moisture content of potato starch**

The moisture content of potato starch is the content of moisture in the entire weight of the obtained potato starch, and can be obtained as a percentage obtained by dividing a value of which the weight of dry potato starch is subtracted from the total weight of potato starch by the total weight of potato starch. At this time, the weight of dry potato starch is obtained by measuring the value when the weight change is within 0.001 g and the weight remains unchanged for more than 30 seconds during drying at 125 °C using a moisture analyzer. The moisture content of the potato starch used in Examples, Comparative Examples, and Reference Examples was measured using the above method, and found to be 17 wt%. Accordingly, it was found that the actual starch content contained in the potato starch was 83 wt%.

**Example 1-1**

In an internal mixer reactor, 28 g (actual starch content considering the moisture content: 23.24 g, 0.143 mol) of potato starch (manufactured by Daesang, moisture content of 17 wt%), 4.01 g (0.1 mol, 0.7 equivalents relative to the number of moles of starch) of NaOH, 11.69 g (0.1 mol, 0.7 equivalents relative to the number of moles of starch) of SMCA and 12 g of distilled water were charged to 77% of the reactor volume and mixed at 50 rpm for 10 minutes to perform gelatinization and carboxymethylation of starch.

At this time, the internal torque and temperature in the reactor during mixing were measured using a temperature and torque sensor located between two screws provided in the internal mixer reactor. As a result of the measurement, it was confirmed that gelatinization of starch was completed within 3 minutes from the start of mixing, and the torque and temperature in the reactor were maintained at 7 to 9 Nm and 96.3 ± 1 °C, respectively, after gelatinization of starch.

The prepared carboxymethyl starch was recovered, dissolved in distilled water, precipitated in methanol in an amount 40 times the volume (ml/g) of the carboxymethyl starch, and then filtered and dried under reduced pressure to obtain purified carboxymethylated starch.

**Example 1-2**

**(Step 1)**

In an internal mixer reactor, 33.4 g (actual starch content considering the moisture content: 27.72 g, 0.171 mol) of potato starch (manufactured by Daesang, moisture content of 17 wt%), 4.79 g (0.12 mol, 0.7 equivalents relative to the number of moles of starch) of NaOH, 13.94 g (0.12 mol, 0.7 equivalents relative to the number of moles of starch) of SMCA and 14.31 g of distilled water were charged to 92% of the reactor volume and mixed at 50 rpm for 10 minutes to perform gelatinization and carboxymethylation of starch.

At this time, the internal torque and temperature in the reactor during mixing were measured using a temperature and torque sensor located between two screws provided in the internal mixer reactor, and the graph of this measurement is shown in FIG. 1. As a result of the measurement, it was confirmed that gelatinization of starch was completed within 3 minutes from the start of mixing, and the torque and temperature in the reactor were maintained at 8 to 10 Nm and 96.4 ± 1 °C, respectively, after gelatinization of starch.

Afterwards, an additional purification step was performed in the same manner as in Example 1-1 to obtain purified carboxymethylated starch.

**Comparative Example 1-1**

200 L of isopropyl alcohol (IPA) was added to a flask, and 20 g (actual starch content considering the moisture content: 16.60 g, starch content: 0.102 mol) of potato starch (manufactured by Daesang, moisture content of 17 wt%) and 4.34 g (0.109 mol, 1.06 equivalents relative to the number of moles of starch) of NaOH were dispersed therein, and maintained at a temperature of 70 °C. Afterwards, 20 g of distilled water and 12.65 g of SMCA (0.109 mol, 1.06 equivalents relative to the number of moles of starch) were added thereto and reacted for 5 hours to prepare carboxymethylated starch. In the case of Comparative Example 1-1, gelatinization and carboxymethylation of starch proceeded with excess solvent in the flask, so that the torque in the flask was not sufficiently induced.

Afterwards, an additional purification step was performed in the same manner as in Example 1-1 to obtain purified carboxymethylated starch.

**Comparative Example 1-2**

400 L of isopropyl alcohol (IPA) was added to a flask, and 200 g (actual starch content considering the moisture content: 166 g, starch content: 1.02 mol) of potato starch (manufactured by Daesang, moisture content of 17 wt%) and 30.71 g (0.768 mol, 0.75 equivalents relative to the number of moles of starch) of NaOH were dispersed therein, and maintained at a temperature of 70 °C. Afterwards, 77 g of distilled water and 89.44 g of SMCA (0.768 mol, 0.75 equivalents relative to the number of moles of starch) were added thereto and reacted for 5 hours to prepare carboxymethylated starch. In the case of Comparative Example 1-2, gelatinization and carboxymethylation of starch proceeded in the flask, so that the torque in the flask was not sufficiently induced.

Afterwards, an additional purification step was performed in the same manner as in Example 1-1 to obtain purified carboxymethylated starch.

**Comparative Example 1-3**

In an internal mixer reactor, 28 g (actual starch content considering the moisture content: 23.24 g, 0.143 mol) of potato starch (manufactured by Daesang, moisture content of 17 wt%), 6.91 g (0.173 mol, 1.2 equivalents relative to the number of moles of starch) of NaOH, 20.11 g (0.173 mol, 1.2 equivalents relative to the number of moles of starch) of SMCA, 3 g of distilled water and 9 g of IPA were charged to 95% of the reactor volume and mixed at 50 rpm for 10 minutes to perform gelatinization and carboxymethylation of starch.

At this time, the internal torque and temperature in the reactor during mixing were measured using a temperature and torque sensor located between two screws provided in the internal mixer reactor, and the graph of this measurement is shown in FIG. 2. As a result of the measurement, it was confirmed that gelatinization of starch was completed within 3 minutes from the start of mixing, and the torque and temperature in the reactor continued to increase to 90 Nm or more and 130 °C or more, respectively, after gelatinization of starch. Accordingly, it was difficult for the carboxymethylation to proceed, making it impossible to obtain carboxymethylated starch with a uniform degree of substitution.

**Reference Example 1-1**

In an internal mixer reactor, 28 g (actual starch content considering the moisture content: 23.24 g, 0.143 mol) of potato starch (manufactured by Daesang, moisture content of 17 wt%), 6.91 g (0.173 mol, 1.2 equivalents relative to the number of moles of starch) of NaOH, 20.11 g (0.173 mol, 1.2 equivalents relative to the number of moles of starch) of SMCA, and 12 g of distilled water were charged to 90% of the reactor volume and mixed at 50 rpm for 10 minutes to perform gelatinization and carboxymethylation of starch.

At this time, the internal torque and temperature in the reactor during mixing were measured using a temperature and torque sensor located between two screws provided in the internal mixer reactor, and the graph of this measurement is shown in FIG. 3. As a result of the measurement, it was confirmed that gelatinization of starch was completed within 3 minutes from the start of mixing, and the torque and temperature in the reactor were maintained at 8 to 10 Nm and 96.9 $\pm$ 1 °C, respectively, after gelatinization of starch.

Afterwards, an additional purification step was performed in the same manner as in Example 1-1 to obtain purified carboxymethylated starch.

**Reference Example 1-2**

In an internal mixer reactor, 28 g (actual starch content considering the moisture content: 23.24 g, 0.143 mol) of potato starch (manufactured by Daesang, moisture content of 17 wt%), 6.91 g (0.173 mol, 1.2 equivalents relative to the number of moles of starch) of NaOH, 20.11 g (0.173 mol, 1.2 equivalents relative to the number of moles of starch) of

SMCA, 6 g of distilled water and 6 g of glycerol were charged to 93% of the reactor volume and mixed at 50 rpm for 10 minutes to perform gelatinization and carboxymethylation of starch.

At this time, the internal torque and temperature in the reactor during mixing were measured using a temperature and torque sensor located between two screws provided in the internal mixer reactor, and the graph of this measurement is shown in FIG. 4. As a result of the measurement, it was confirmed that gelatinization of starch was completed within 4 minutes from the start of mixing, and the torque and temperature in the reactor were maintained at 16 to 18 Nm and 102.5 ± 1 °C, respectively, after gelatinization of starch.

Afterwards, an additional purification step was performed in the same manner as in Example 1-1 to obtain purified carboxymethylated starch.

## Reference Example 1-3

In an internal mixer reactor, 28 g (actual starch content considering the moisture content: 23.24 g, 0.143 mol) of potato starch (manufactured by Daesang, moisture content of 17 wt%), 6.91 g (0.173 mol, 1.2 equivalents relative to the number of moles of starch) of NaOH, 20.11 g (0.173 mol, 1.2 equivalents relative to the number of moles of starch) of SMCA, 6 g of distilled water and 6 g of IPA were charged to 88% of the reactor volume and mixed at 50 rpm for 10 minutes to perform gelatinization and carboxymethylation of starch.

At this time, the internal torque and temperature in the reactor during mixing were measured using a temperature and torque sensor located between two screws provided in the internal mixer reactor, and the graph of this measurement is shown in FIG. 5. As a result of the measurement, it was confirmed that gelatinization of starch was completed within 4 minutes from the start of mixing, and the torque and temperature in the reactor were maintained at 12 to 15 Nm and 98.4 ± 1 °C, respectively, after gelatinization of starch.

Afterwards, an additional purification step was performed in the same manner as in Example 1-1 to obtain purified carboxymethylated starch.

The starch content in the potato starch used in Examples, Comparative Examples, and Reference Examples, the moisture content in the potato starch, the total water input, the amount of water and additional solvent used relative to the weight of starch, and the equivalents of NaOH and SMCA used are shown in Table 1 below.

## Examples - Preparation of super absorbent polymer

### Example 2-1

**(Step 1)**

The carboxymethylated starch prepared in Example 1-1 was dissolved in 10 times its weight of water.

**(Step 2)**

Thereafter, the product of step 1 with a pH of 7.5 to 8 was adjusted to pH 6.5 using a 3% aqueous hydrochloric acid solution, and dried for 2 to 3 hours while supplying hot air at 120 °C in an oven capable of changing wind direction up and down at the above pH, followed by self-crosslinking to prepare a crosslinked polymer.

**(Additional step)**

Thereafter, the crosslinked polymer was pulverized with a pulverizing machine and classified to select 150 to 850 $\mu$m in size, which was used as the final super absorbent polymer.

### Example 2-2, Comparative Example 2-1, Comparative Example 2-2, and Reference Examples 2-1 to Reference Examples 2-3

A super absorbent polymer was prepared in the same manner as in Example 2-1, except that the carboxymethylated starch prepared in one of Example 1-2, Comparative Example 1-1, Comparative Example 1-2, and Reference Examples 1-1 to Reference Examples 1-3 was used instead of the carboxymethylated starch prepared in Example 1-1.

**Test Example 1: Measurement of degree of substitution of carboxymethylated starch**

(1) Measurement of actual degree of substitution

First, a sample for $^1H$ NMR analysis of the carboxymethylated starch prepared in one of Examples, Comparative Examples, and Reference Examples was prepared, and $^1H$ NMR spectra were obtained. Specifically, the sample for $^1H$ NMR analysis was prepared by adding carboxymethylated starch dissolved in $H_20$ to MeOH, followed by stirring, filtering, and drying. Then, 50 mg of the sample was prepared and dissolved in 0.75 mL of $D_20$ and 0.25 mL of $D_2SO_4$, which are NMR measurement solvents, and stirred at 90 °C for 1 hour. It was confirmed that the color of the sample changed to dark yellow.

Thereafter, $^1H$ NMR spectrum of the carboxymethylated starch prepared in one of Example 1-1, Example 1-2, Reference Example 1-1, Reference Example 1-2, and Reference Example 1-3 are shown in FIGs. 6 to 10, respectively.

More specifically, the degree of substitution of the carboxymethylated starch prepared in Example 1 was measured as follows.

1) After obtaining the $^1H$ NMR spectrum of the carboxymethylated starch prepared in Example 1, the sum of integrals of 2.57 ppm, 2.58 ppm, 2.60 ppm, 2.64 ppm, 2.66 ppm, 3.15 ppm, 3.16 ppm, 3.33 ppm and 3.34 ppm, the peaks within 2.5-3.6 ppm, was set to be 1.
2) Next, the degree of substitution at second carbon (2-DS) was obtained as the sum of integrals at 3.34 ppm, 3.33ppm (doublet, 0.23) and 2.57 ppm, 2.58 ppm (doublet, 0.20) peaks, the degree of substitution at third carbon (3-DS) was obtained by dividing the integral value at 2.39 ppm, 2.41 ppm (0.20) peaks by 2, and the degree of substitution at sixth carbon (6-DS) was obtained by dividing the integral value at 2.14 ppm, 2.15 ppm (0.19) peaks by 2.
3) Then, the degree of substitution at second carbon (2-DS), the degree of substitution at third carbon (3-DS) and the degree of substitution at sixth carbon (6-DS) were all added together to obtain the degree of substitution (DS) of the carboxylmethyl group.

In the same way, the degree of substitution of the carboxymethyl group of the carboxymethylated starch prepared in other Examples, Comparative Examples and Reference Examples was obtained. Since a slight shift in the $^1H$ NMR spectrum may occur, the results of the degree of substitution measurement compared to the spectrum of Example 1 are shown in Table 2.

**(2) Measurement of reactive efficiency (RE,** %)

The reactive efficiency (RE, %) was calculated according to Equation 1 below, and the results are shown in Table 2.

Reactive efficiency (RE, %)= (actual degree of substitution)/(predicted degree of substitution) * 100 [Equation 1]

In the Equation 1,
the predicted degree of substitution refers to an equivalent of SMCA added relative to the number of moles of starch.

**Test Example 2: Measurement of centrifuge retention capacity (CRC) of super absorbent polymer**

The centrifuge retention capacity of the super absorbent polymer prepared in one of Examples, Comparative Examples and Reference Examples by water absorption capacity under a non-loading condition was measured according to the EDANA WSP 241.3 (European Disposables and Nonwovens Association), and shown in Table 3.

Specifically, the super absorbent polymers prepared in Examples, Comparative Examples, and Reference Examples were classified using a #30-50 sieve to obtain only super absorbent polymers with a particle diameter of 300 to 600 μm. After inserting $W_0$ (g, about 0.17 g) of the super absorbent polymer uniformly in a nonwoven fabric envelope and sealing the same, it was soaked in physiological saline (0.9 wt% sodium chloride aqueous solution) at room temperature. After 30 minutes, the envelope was centrifuged at 250G for 3 minutes to drain, and the weight $W_2$ (g) of the envelope was measured. Further, after carrying out the same operation without using the polymer, the weight $W_1$ (g) of the envelope was measured.

Then, CRC (g/g) was calculated using the obtained weight values according to the following Equation 2.

[Equation 2]

$$CRC\ (g/g) = \{[W_2(g) - W_1(g)]/W_0(g)\} - 1$$

[Table 1]

| | Starch content in potato starch | Moisture content in potato starch | Water input (g) | Amt. of water used* | Amt. of additional solvent used* | NaOH (eq) | SMCA (eq) |
|---|---|---|---|---|---|---|---|
| Ex. 1-1 | 23.24 | 4.76 | 12 | 0.72 times | - | 0.7 | 0.7 |
| Ex. 1-2 | 27.72 | 5.68 | 14.31 | 0.72 times | - | 0.7 | 0.7 |
| Comp. Ex. 1-1 | 16.60 | 3.40 | 20 | 1.41 times | IPA 12.05 times | 1.06 | 1.06 |
| Comp. Ex. 1-2 | 166 | 34.0 | 77 | 0.67 times | IPA 2.41 times | 0.75 | 0.75 |
| Comp. Ex. 1-3 | 23.24 | 4.76 | 3 | 0.33 times | IPA 0.39 times | 1.2 | 1.2 |
| Ref. Ex. 1-1 | 23.24 | 4.76 | 12 | 0.72 times | - | 1.2 | 1.2 |
| Ref. Ex. 1-2 | 23.24 | 4.76 | 6 | 0.46 times | glycerol 0.26 times | 1.2 | 1.2 |
| Ref. Ex. 1-3 | 23.24 | 4.76 | 6 | 0.46 times | IPA 0.26 times | 1.2 | 1.2 |
| * Amount of water and additional solvent used: in weight ratio relative to the weight of starch | | | | | | | |

[Table 2]

| No. | Torque after gelatinization (Nm) | Temperature after gelatinization (°C) | Predicted DS | Actual DS | RE (%) |
|---|---|---|---|---|---|
| Ex. 1-1 | 7-9 | 96.3±1 | 0.7 | 0.64 | 91.43 |
| Ex. 1-2 | 8-10 | 96.4±1 | 0.7 | 0.65 | 92.86 |
| Comp. Ex. 1-1 | - | - | 1.06 | 0.75 | 70.75 |
| Comp. Ex. 1-2 | - | - | 0.75 | 0.68 | 90.67 |
| Comp. Ex. 1-3 | continued to increase | continued to increase | 1.2 | Not measurable | Not measurable |
| Ref. Ex. 1-1 | 8-10 | 96.9±1 | 1.2 | 0.96 | 80.00 |
| Ref. Ex. 1-2 | 16-18 | 102.5:1:1 | 1.2 | 1.05 | 87.50 |
| Ref. Ex. 1-3 | 12-15 | 98.4±1 | 1.2 | 0.90 | 75.00 |

[Table 3]

| | Carboxymethylated starch used | CRC (g/g) |
|---|---|---|
| Ex. 2-1 | Ex. 1-1 | 41.6 |
| Ex. 2-2 | Ex. 1-2 | 43.01 |
| Comp. Ex. 2-1 | Comp. Ex. 1-1 | 41.1 |
| Comp. Ex. 2-2 | Comp. Ex. 1-2 | 34.2 |
| Ref. Ex. 2-1 | Ref. Ex. 1-1 | 39.1 |
| Ref. Ex. 2-2 | Ref. Ex. 1-2 | 42.5 |

(continued)

| | Carboxymethylated starch used | CRC (g/g) |
|---|---|---|
| Ref. Ex. 2-3 | Ref. Ex. 1-3 | 42.1 |

Referring to Tables 1 to 3 above, it was confirmed that the preparation method of Examples in which gelatinization and carboxymethylation of starch were performed using a specific content of water, and a predetermined torque was maintained after gelatinization of starch exhibited significantly improved reactive efficiency compared to the preparation method of Comparative Example 1-1 in which gelatinization and carboxymethylation of starch were performed using an excessive amount of solvent according to a commonly known preparation method.

In addition, in the case of the carboxymethylated starch prepared in Comparative Example 1-2, a similar equivalent of SMCA was used as in Examples and thus the degree of substitution was also similar, but water retention capacity of the final super absorbent polymer was significantly lower than that of the super absorbent polymer manufactured using the carboxymethylated starch of Examples. This is believed to be because, unlike Examples, the torque was not sufficiently induced in the flask reactor, and the torque could not be maintained at a certain level after gelatinization of starch, and thus the carboxymethyl groups were not uniformly substituted compared to the carboxymethylated starch of Examples.

In addition, it was confirmed from Comparative Example 1-3 that when too little water was used during the gelatinization and carboxymethylation of starch, the internal torque in the reactor continued to increase after gelatinization, making it impossible to produce uniformly substituted carboxymethylated starch.

In addition, it was confirmed from Reference Examples 1-1 to 1-3 that the carboxymethylation efficiency could be further improved when adjusting the equivalent of reactants to an appropriate amount while performing carboxymethylation using water as a sole solvent.

## Claims

**1.** A method for preparing a carboxyalkylated polysaccharide comprising the step of:

mixing a polysaccharide, a hydroxide, a metal salt of haloalkylcarboxylic acid, and water in a reactor, and performing gelatinization and carboxyalkylation of the polysaccharide,
wherein the water is used in an amount of 0.35 to 1.0 times a weight of the polysaccharide, and
a torque in the reactor is maintained at 7 to 18 Nm after the gelatinization of the polysaccharide.

**2.** The method of claim 1,
wherein no solvent other than water is used.

**3.** The method of claim 1,
wherein the water is used in an amount of 0.45 to 0.75 times the weight of the polysaccharide.

**4.** The method of claim 1,
wherein the polysaccharide is one or more selected from the group consisting of starch, dextrin, glycogen, cellulose, pectin, inulin, agar, and guar gum.

**5.** The method of claim 1,
wherein a degree of substitution (DS) of carboxyalkyl group in the prepared carboxyalkylated polysaccharides is 0.6 to 1.1.

**6.** The method of claim 1,
wherein the carboxyalkylated polysaccharides are carboxymethylated.

**7.** The method of claim 1,
wherein the mixing is performed in a state wherein 70 to 95% of a total volume of the reactor is filled.

**8.** The method of claim 1,
wherein the reactor is an internal mixer.

**9.** The method of claim 1, wherein the hydroxide is at least one selected from the group consisting of sodium hydroxide, potassium hydroxide, and lithium hydroxide.

**10.** The method of claim 1, wherein the hydroxide is used in an amount of 0.5 or more and less than 1.2 equivalents relative to the number of moles obtained by dividing the weight in (g) of the polysaccharide by the molecular weight of anhydroglucose unit (AGU).

**11.** The method of claim 1, wherein the metal salt of haloalkylcarboxylic acid is an alkali metal salt of chloroacetic acid.

**12.** The method of claim 11, wherein the alkali metal salt of chloroacetic acid is at least one selected from the group consisting of sodium monochloroacetate (SMCA), potassium monochloroacetate, and lithium monochloroacetate.

**13.** The method of claim 1, wherein the metal salt of haloalkylcarboxylic acid is used in an amount of 1 to 1.29 mol based on 1 mol of the hydroxide.

**14.** The method of claim 1, wherein the mixing is performed for 5 to 15 minutes.

**15.** The method of claim 1, wherein the gelatinization of the polysaccharide is completed within 2/5 hours of a total mixing time from start of mixing.

**16.** The method of claim 1, wherein a temperature in the reactor is maintained at 90 to 110 °C after gelatinization of the polysaccharide.

**17.** The method of claim 1, further comprising the step of dissolving the prepared product in water and then precipitating it in an alcohol-based organic solvent.

**18.** The method of claim 17, wherein the alcohol-based organic solvent is at least one selected from the group consisting of methanol, ethanol, and isopropyl alcohol.

**19.** A method for preparing a biodegradable super absorbent polymer comprising the steps of:

dissolving the carboxyalkylated polysaccharide prepared according to the preparation method of any one of Claims 1 to 18 in 5 to 15 times its weight of water (step 1); and

self-crosslinking the product of step 1 while drying at pH 6 to 8 (step 2).

**20.** The method of claim 19, wherein the prepared super absorbent polymer satisfies a centrifuge retention capacity (CRC) of 30 to 45 g/g as measured according to EDANA WSP 241.3.

**21.** The method of claim 19, wherein the dissolution in step 1 is performed under standard temperature and pressure conditions.

**22.** The method of claim 19, wherein the drying in step 2 is performed at a temperature of 100 to 130 °C.

**23.** The method of claim 19,

after the step 2,

further comprising the step of pulverizing and classifying the crosslinked polymer prepared in step 2.

【FIG. 1】

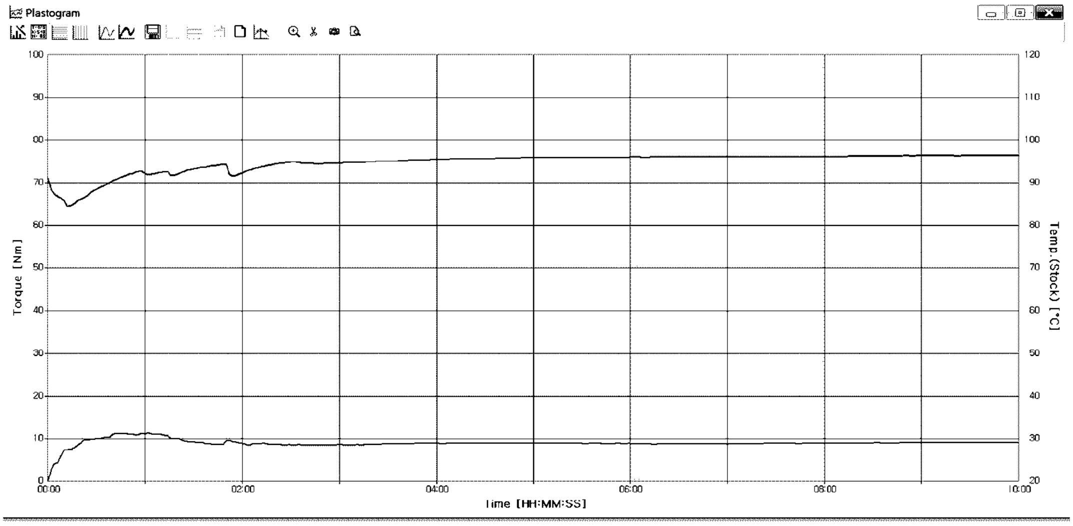
Plastogram
Torque [Nm]
Temp.(Stock) [°C]
Time [HH:MM:SS]

【FIG. 2】

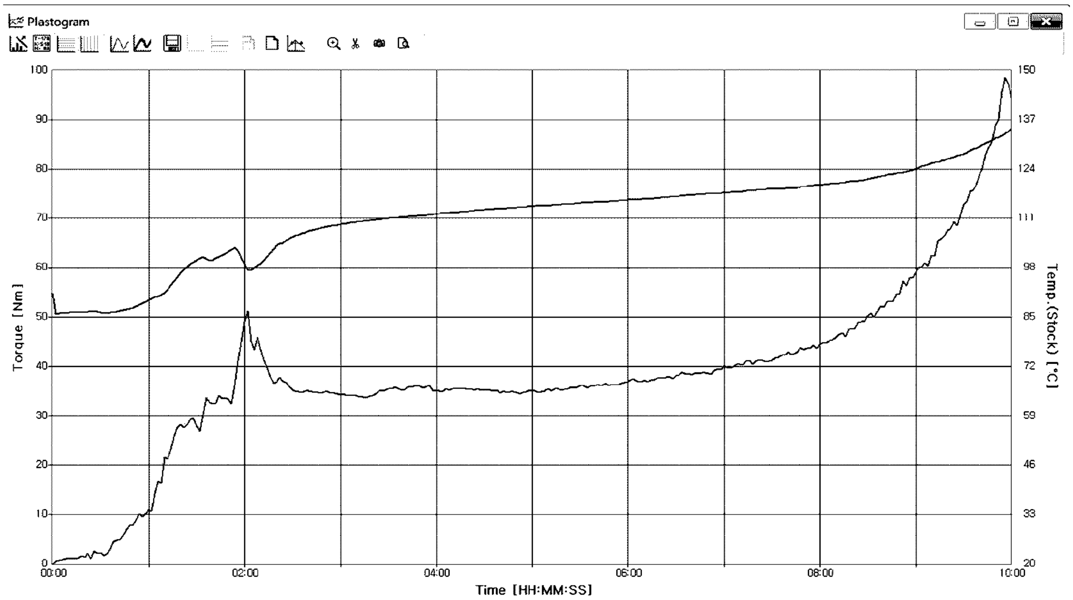
Plastogram
Torque [Nm]
Temp.(Stock) [°C]
Time [HH:MM:SS]

【FIG. 3】

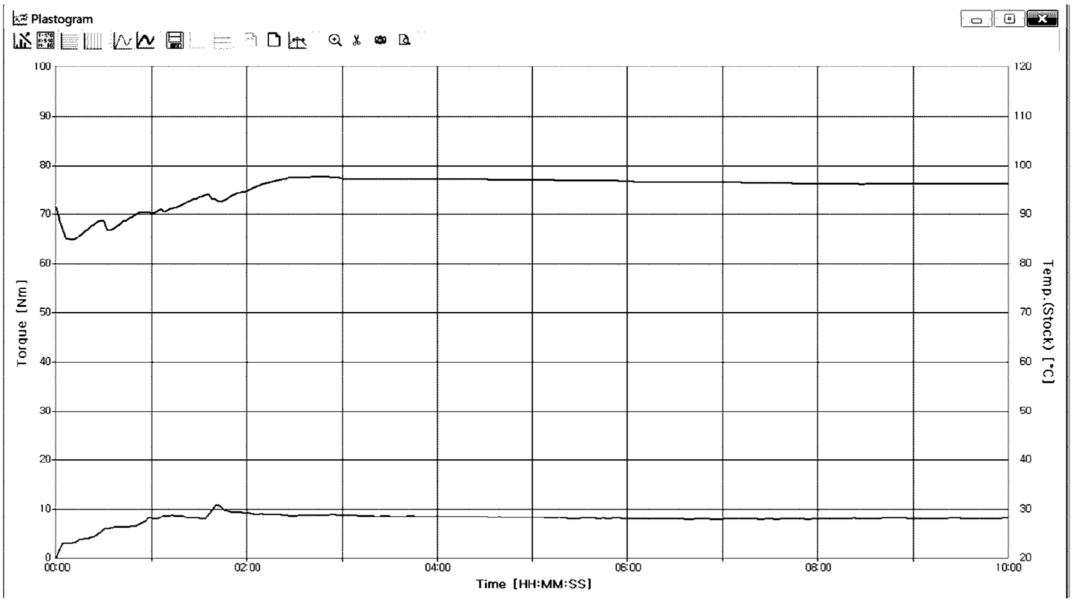
Plastogram
Torque [Nm]
Temp.(Stock) [°C]
Time [HH:MM:SS]
00:00
02:00
04:00
06:00
08:00
10:00

【FIG. 4】

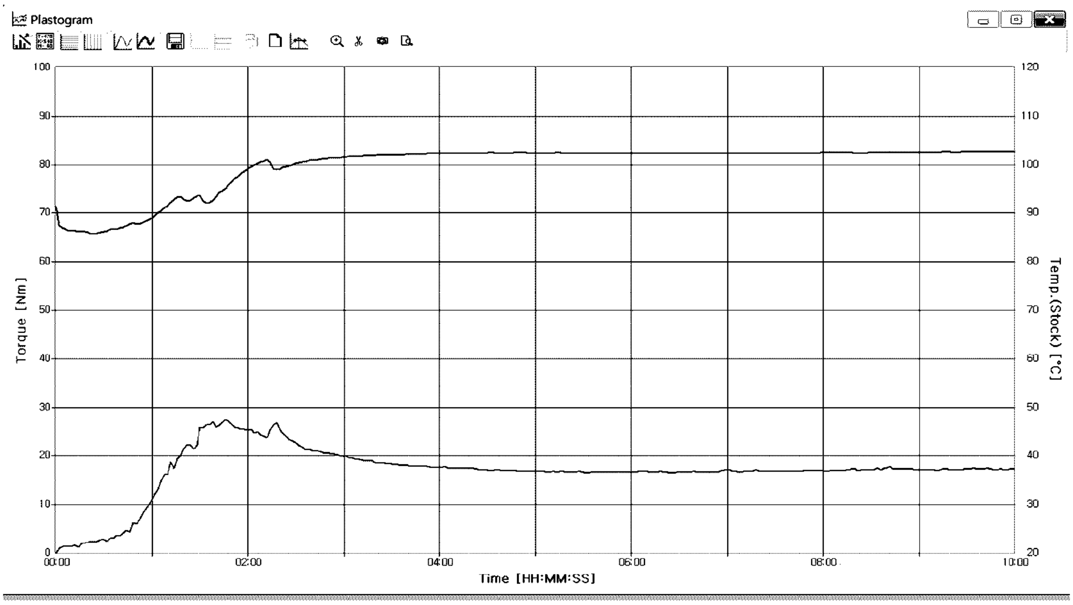
Plastogram
Torque [Nm]
Temp.(Stock) [°C]
Time [HH:MM:SS]
00:00
02:00
04:00
06:00
08:00
10:00

【FIG. 5】

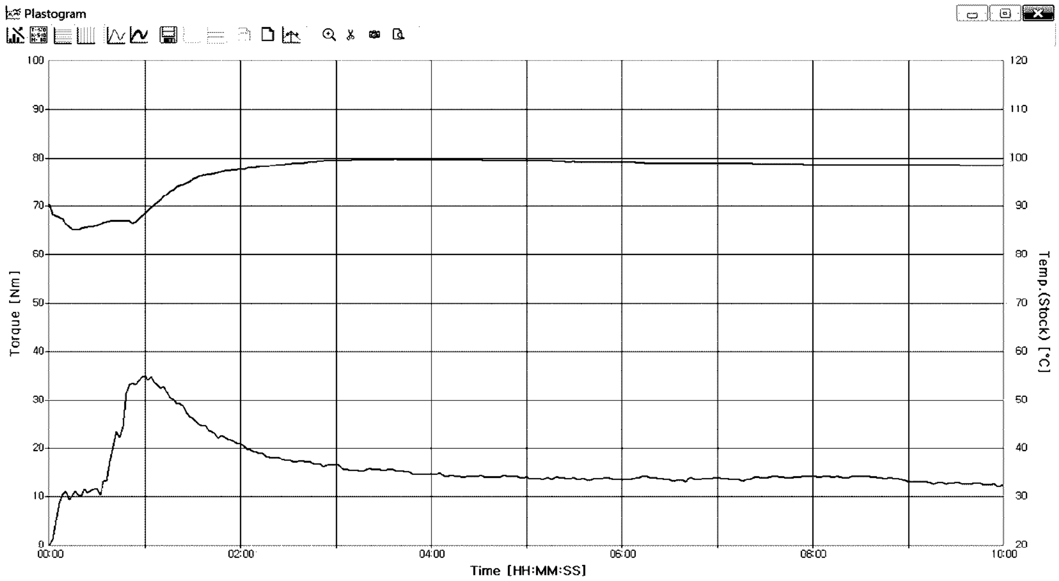
Plastogram
Torque [Nm]
Temp.(Stock) [°C]
Time [HH:MM:SS]
00:00
02:00
04:00
06:00
08:00
10:00

【FIG. 6】

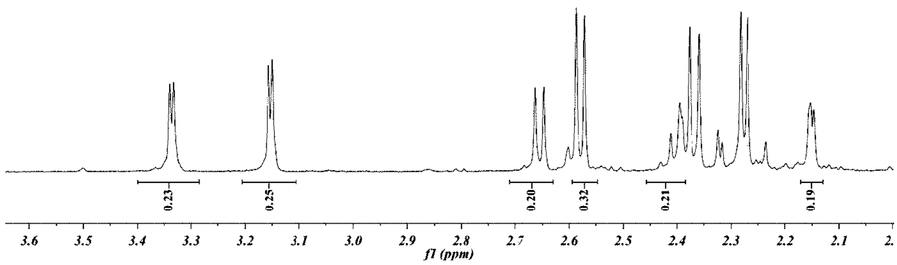
0.23
0.25
0.20
0.32
0.21
0.19
f1 (ppm)

【FIG. 7】

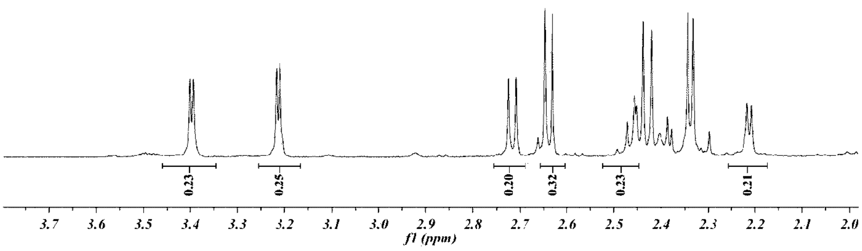
0.23
0.25
0.20
0.32
0.23
0.21
3.7 3.6 3.5 3.4 3.3 3.2 3.1 3.0 2.9 2.8 2.7 2.6 2.5 2.4 2.3 2.2 2.1 2.0
f1 (ppm)

【FIG. 8】

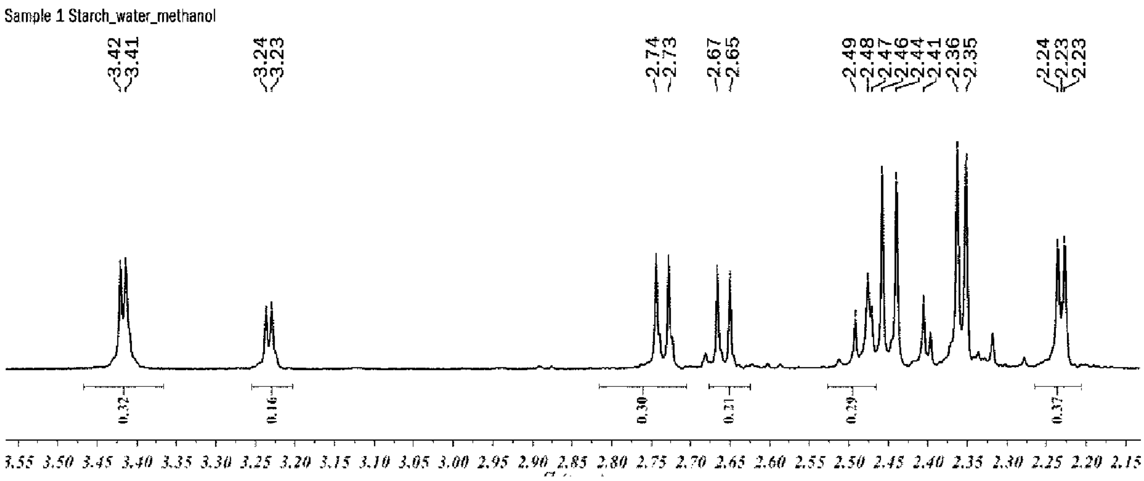
Sample 1 Starch_water_methanol
3.42
3.41
3.24
3.23
2.74
2.73
2.67
2.65
2.49
2.48
2.47
2.46
2.44
2.41
2.36
2.35
2.24
2.23
2.23
0.32
0.16
0.30
0.31
0.29
0.37
3.55 3.50 3.45 3.40 3.35 3.30 3.25 3.20 3.15 3.10 3.05 3.00 2.95 2.90 2.85 2.80 2.75 2.70 2.65 2.60 2.55 2.50 2.45 2.40 2.35 2.30 2.25 2.20 2.15

【FIG. 9】

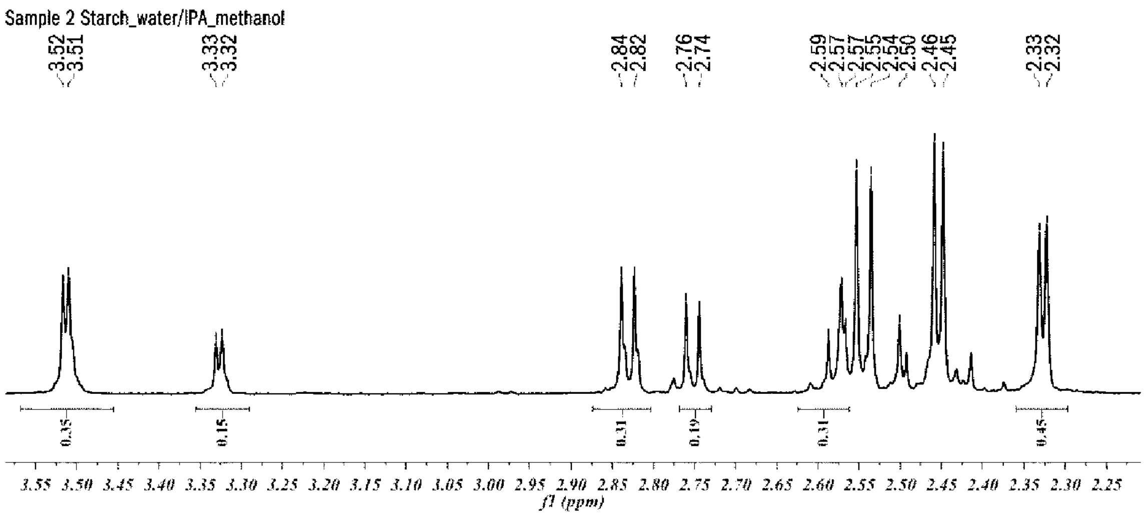
Sample 2 Starch_water/IPA_methanol
3.52
3.51
3.33
3.32
2.84
2.82
2.76
2.74
2.59
2.57
2.55
2.54
2.50
2.46
2.45
2.33
2.32
0.35
0.15
0.31
0.19
0.31
0.45
3.55 3.50 3.45 3.40 3.35 3.30 3.25 3.20 3.15 3.10 3.05 3.00 2.95 2.90 2.85 2.80 2.75 2.70 2.65 2.60 2.55 2.50 2.45 2.40 2.35 2.30 2.25
f1 (ppm)

【FIG. 10】

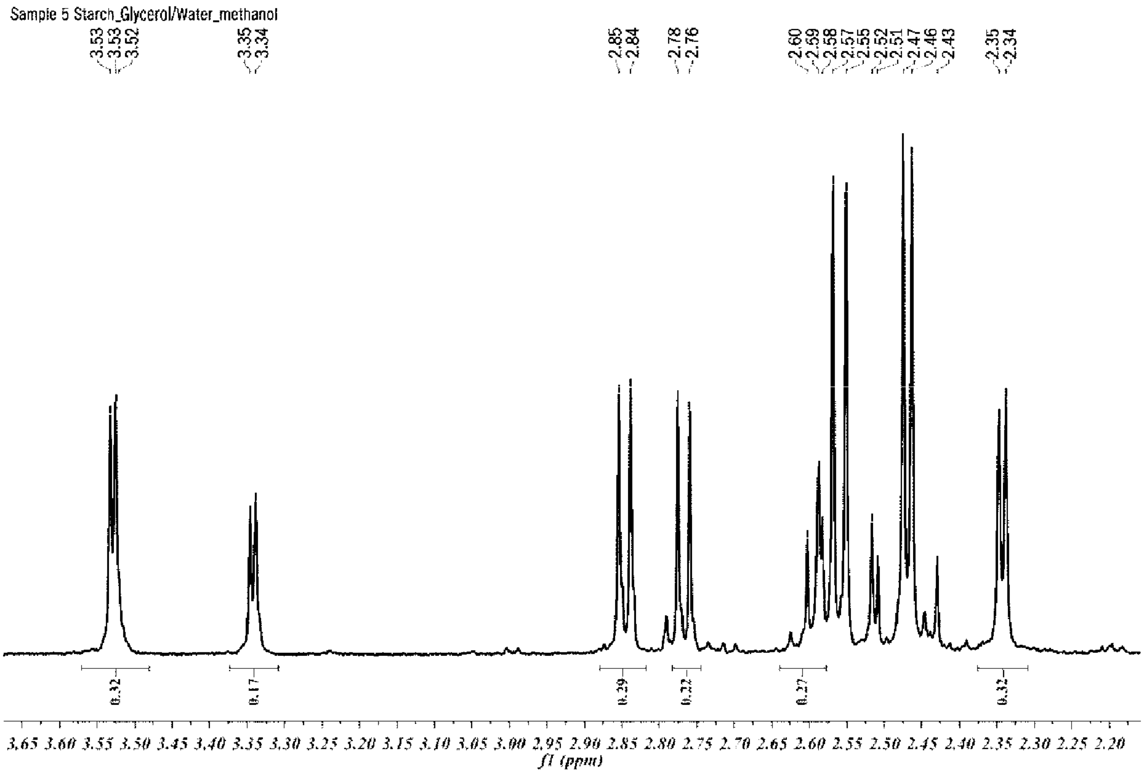
Sample 5 Starch_Glycerol/Water_methanol
3.53
3.53
3.52
3.35
3.34
2.85
2.84
2.78
2.76
2.60
2.59
2.58
2.57
2.55
2.52
2.51
2.47
2.46
2.43
2.35
2.34
0.32
0.17
0.29
0.22
0.27
0.32
3.65 3.60 3.55 3.50 3.45 3.40 3.35 3.30 3.25 3.20 3.15 3.10 3.05 3.00 2.95 2.90 2.85 2.80 2.75 2.70 2.65 2.60 2.55 2.50 2.45 2.40 2.35 2.30 2.25 2.20
f1 (ppm)

**INTERNATIONAL SEARCH REPORT**

International application No.
**PCT/KR2023/021435**

**A. CLASSIFICATION OF SUBJECT MATTER**

**C08B 31/04**(2006.01)i; **C08B 11/12**(2006.01)i; **C08B 37/00**(2006.01)i

According to International Patent Classification (IPC) or to both national classification and IPC

**B. FIELDS SEARCHED**

Minimum documentation searched (classification system followed by classification symbols)

C08B 31/04(2006.01); A61F 13/472(2006.01); A61K 47/36(2006.01); C08B 11/12(2006.01); C08B 31/10(2006.01); C08B 37/08(2006.01); C08L 1/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다당류(polysaccharide), 수산화소듐(sodium hydroxide), 모노클로로아세트산 소듐(sodium monochloroacetate), 물(water), 호화(gelatinization), 카르복시알킬화(carboxyalkylated), 고흡수성 수지(super absorbent polymer), 자가 가교(self crosslinking)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2016-0094535 A (SAMYANG CORPORATION) 10 August 2016 (2016-08-10)<br>See paragraphs [0012], [0015], [0029] and [0037]-[0043]; and example 1. | 1-16,19-23<br>17-18 |
| Y | KR 10-2016-0067887 A (KEWPIE CORPORATION) 14 June 2016 (2016-06-14)<br>See paragraphs [0172]-[0173]. | 17-18 |
| A | JP 2022-145947 A (NIPPON PAPER INDUSTRIES CO., LTD.) 04 October 2022 (2022-10-04)<br>See entire document. | 1-23 |
| A | KR 10-2013-0084222 A (DOW GLOBAL TECHNOLOGIES LLC) 24 July 2013 (2013-07-24)<br>See entire document. | 1-23 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No. **PCT/KR2023/021435**

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2000-0007056 A (KIM, Kong Su et al.) 07 February 2000 (2000-02-07) See entire document. | 1-23 |

Form PCT/ISA/210 (second sheet) (July 2022)

**INTERNATIONAL SEARCH REPORT**
**Information on patent family members**

International application No.
**PCT/KR2023/021435**

| Patent document cited in search report | Publication date (day/month/year) | Patent family member(s) | Publication date (day/month/year) |
|---|---|---|---|
| KR 10-2016-0094535 A | 10 August 2016 | KR 10-1655299 B1 | 08 September 2016 |
| KR 10-2016-0067887 A | 14 June 2016 | CN 105658674 A | 08 June 2016 |
| | | CN 105658674 B | 09 April 2019 |
| | | EP 3056519 A1 | 17 August 2016 |
| | | EP 3056519 A4 | 08 November 2017 |
| | | EP 3056519 B1 | 10 April 2019 |
| | | JP 2015-147945 A | 20 August 2015 |
| | | JP 6377020 B2 | 22 August 2018 |
| | | KR 10-2268945 B1 | 23 June 2021 |
| | | US 10155824 B2 | 18 December 2018 |
| | | US 2016-0244534 A1 | 25 August 2016 |
| | | WO 2015-053280 A1 | 16 April 2015 |
| JP 2022-145947 A | 04 October 2022 | JP 7338014 B2 | 04 September 2023 |
| KR 10-2013-0084222 A | 24 July 2013 | CN 102822204 A | 12 December 2012 |
| | | CN 102822204 B | 07 October 2015 |
| | | EP 2552968 A1 | 06 February 2013 |
| | | EP 2552968 B1 | 01 March 2017 |
| | | JP 2013-523919 A | 17 June 2013 |
| | | KR 10-1709930 B1 | 24 February 2017 |
| | | US 2013-0012696 A1 | 10 January 2013 |
| | | WO 2011-120533 A1 | 06 October 2011 |
| KR 10-2000-0007056 A | 07 February 2000 | KR 10-0328334 B1 | 13 March 2002 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220183169